# EUROPEAN PATENT SPECIFICATION

(11) **EP 3 967 471 B1**
(45) Date of publication and mention of the grant of the patent: **19.04.2023**
(21) Application number: 21191232.4
(22) Date of filing: 13.08.2021
(51) Int. Cl.: B29C 33/00, B29C 45/26, B29D 35/00, B29D 35/08, B29D 35/14

(54) **KIT FOR MOLDING POLYMERIC MANUFACTURED ARTICLES**
BAUSATZ ZUM FORMEN VON GEGENSTÄNDEN AUS POLYMER
KIT POUR LE MOULAGE D'ARTICLES MANUFACTURÉS EN POLYMÈRE

(30) Priority: 15.09.2020 IT 202000021727
(43) Date of publication of application: 16.03.2022
(73) Proprietor: DA. MA. & Co S.r.l., 63812 Montegranaro FM (IT)
(72) Inventor: MAZZA, Dario, 63812 MONTEGRANARO FM (IT); MAZZA, Emanuele, 63812 MONTEGRANARO FM (IT)
(74) Representative: Modiano, Micaela Nadia

(56) References cited:
- EP-A1- 2 520 422
- EP-A1- 3 057 784
- EP-A2- 1 604 795
- CN-B- 103 128 978
- US-A1- 2010 098 797

## Description

The present invention relates to a kit (comprising male mold parts, female mold parts and corresponding accessories) which is adapted to mold manufactured articles made of polymeric material, preferably of the expanded type such as the mold disclosed in EP2520422.

Among the expandable polymers (which therefore are subject to respective cross-linking) that can be used for molding operations are polyolefins and, in particular, ethylene vinyl acetate (EVA) which is particularly suitable for providing manufactured articles such as soles for shoes and the like.

The traditionally known method for providing single-colored manufactured articles made of EVA by injection entails the use of a mold made up of two parts: an upper mold part (male mold part), and a lower mold part (female mold part); by closing, these mold parts, which are mutually complementary, form the reduced image of the manufactured article, which will be filled with the corresponding mass of polymer that will form the manufactured article, which is introduced by injection through a special channel provided in the two parts of the male mold part (injection channel).

The traditional method entails the initial heating of the polymeric raw material for the corresponding transition from the solid state (generally the polymers are supplied in granule form) to the viscous (semi-liquid) state, according to standards imposed by the type of polymer used.

Subsequently, by way of a process of injection, the semi-fluid preparation (plasticized EVA) is introduced into the injection channel and, with pressures determined by the mass of the manufactured article that one wants to produce (soles, slippers, bumpers, technical articles etc.), the mold described previously is filled. The mold must be heated beforehand to high temperatures (between 180°C and 200°C), and these temperatures too are predetermined by the injected mass and by the volumes of the shapes of the manufactured article; the mold must also be put under vacuum conditions, i.e. all the air present in the cavity defined inside it must be extracted after it is closed.

Then the polymer is solidified (when the cross-linking takes place), which occurs by virtue of the high temperatures imposed inside the mold, according to times and ways that are determined by the shapes of the manufactured article and by its associated image. More precisely, the exact amount of mass of semi-fluid EVA (or other polymer) that is injected into the mold solidifies (cross-links) in different times, which are substantially proportional to the volumes given by the various parts in which the image is formed in the mold that the injected mass occupies in order to obtain the manufactured article that one wants to produce. In practice, for the same temperature of the mold, large masses of material and thick volumes require a longer time for cross-liking, while small masses and smaller volumes cross-link in a much shorter time. Therefore it is established that the time necessary for the complete cross-linking of the manufactured article made of EVA, determined by the heat transmitted by thermal conduction from the wall of the image of the mold to the material, is directly proportional to the mass of the material itself that filled that image.

In the step of cross-linking, owing to the high temperatures that the material encounters in the mold, the blowing agents present in the mixture of EVA (or other polymer) cross the "point of initial expansion", and therefore they chemically react and release gases, and they trigger the reaction that will cause the manufactured article to expand after the mold is opened. At the end of this step, the pressures reached in the image of the mold are very high, while the temperatures of the injected EVA material have been rendered substantially uniform with those of the mold.

Then the mold is opened, and this is followed by an immediate expansion of the product that exits from the image that accommodated the mass that was injected beforehand. The sharp increase in volume determined by the blowing agents present in the mass of polymeric material brings the molded product, now completely cross-linked (solidified), to dimensions that are actually larger than the final dimensions of the end product itself, once it has cooled. Immediately afterward, the molded manufactured article is extracted from the hot mold and immediately begins its reduction in volume determined by cooling, until it reaches the final dimensions, which are identical in shape to the image of the mold, but proportionally larger than the volumes of these dimensions, by virtue of the expansion that has taken place.

The operator then proceeds to clean the mold to remove any residues left by gases and by inert material and spreads release agents on the surface of the image in order to proceed with a new production cycle.

If it is desired to produce a layered manufactured article (for example two-colored), an intermediate component will be adopted which, interposed temporarily between the male mold part and the female mold part, will isolate them against each other for a preset time during which the polymers can begin to cross-link separately. Once a preset time has passed, the intermediate component will be removed and the male mold part and the female mold part will be mated in order to join the two semi-finished products present in each one of them.

In any case, just after it has been closed, the male mold part needs to be placed in a vacuum: all the air present in the cavities in the male mold part is extracted using specially-designed channels and pumps. Any failure to remove all the air in the cavities that will determine the shape of the manufactured article would result in the air becoming embedded in sacs inside the polymer that will be injected: these are nothing less than air bubbles which would remain between the semi-fluid material introduced through the injection channel, and the male mold part itself.

In the areas where air may have remained encapsulated in contact between the manufactured article and the male mold part, the polymeric material (for example EVA) will not cross-link correctly, leaving blemishes (known as scorching) on the manufactured article which will generally lead to the manufactured article being discarded.

During cross-linking, owing to the high temperatures that the material encounters in the male mold part and the female mold part, the blowing agents present in the mixture of polymer (for example EVA) will cross the "point of initial expansion", reacting chemically and releasing gases. This triggers the reaction that will cause the manufactured article to expand after the mold is opened. At the end of this step, the pressures reached in the cavity defined between the male mold part and the female mold part are very high, while the temperatures of the injected polymeric material (for example EVA) have been rendered substantially uniform with those of the mold.

The conventional molding processes and the corresponding kit, constituted by male mold part, a female mold part and corresponding accessories, present numerous problems.

First of all, it is found that the channel for injecting the polymer (for example EVA) is defined by two semi-tubular, mirror-symmetrical and mutually opposite concavities present in the male mold part and in the female mold part: in some cases, when these concavities are not perfectly juxtaposed, it can happen that the polymer seeps out, thus compromising the quality of the manufactured article being made.

Furthermore, depending on the shape of the manufactured article to be made, the contact surface between the half-cavities present in the male mold part and the corresponding half-cavities present in the female mold part can be irregular and/or jagged.

Ensuring the hermetic seal (necessary in order to provide the vacuum inside the cavity) is very complex when the contact surfaces are irregular, and this can be a problem that is difficult to overcome.

In addition, use of the components of the kit implies that slight wear and/or abrasion can occur, which will tend to further impair the seal between irregular surfaces.

The principal aim of the present invention is to solve the above mentioned drawbacks, by providing a kit for molding polymeric manufactured articles that ensures the hermetic seal of its inner cavity.

Within this aim, an object of the invention is to provide a kit for molding polymeric manufactured articles in which the hermetic seal of the inner cavity cannot be compromised by wear and tear in the course of normal use.

Another object of the invention is to provide a kit for molding polymeric manufactured articles that makes it possible to obtain manufactured articles of high quality with extremely low percentages of discards.

Another object of the invention is to provide a kit for molding polymeric manufactured articles in which no seepage of polymer occurs during the injection through the respective channel.

Another object of the invention is to provide a kit for molding polymeric manufactured articles that is also suitable for providing complex and layered manufactured articles.

Another object of the present invention is to provide a kit for molding polymeric manufactured articles which is low-cost, easily and practically implemented and safe in use.

This aim and these and other objects that will become more apparent hereinafter are achieved by a kit for molding polymeric manufactured articles

as defined in the appended claims. Further characteristics and advantages of the invention will become more apparent from the detailed description that follows of a preferred, but not exclusive, embodiment of the kit for molding polymeric manufactured articles, which is illustrated by way of non-limiting example in the accompanying drawings wherein:

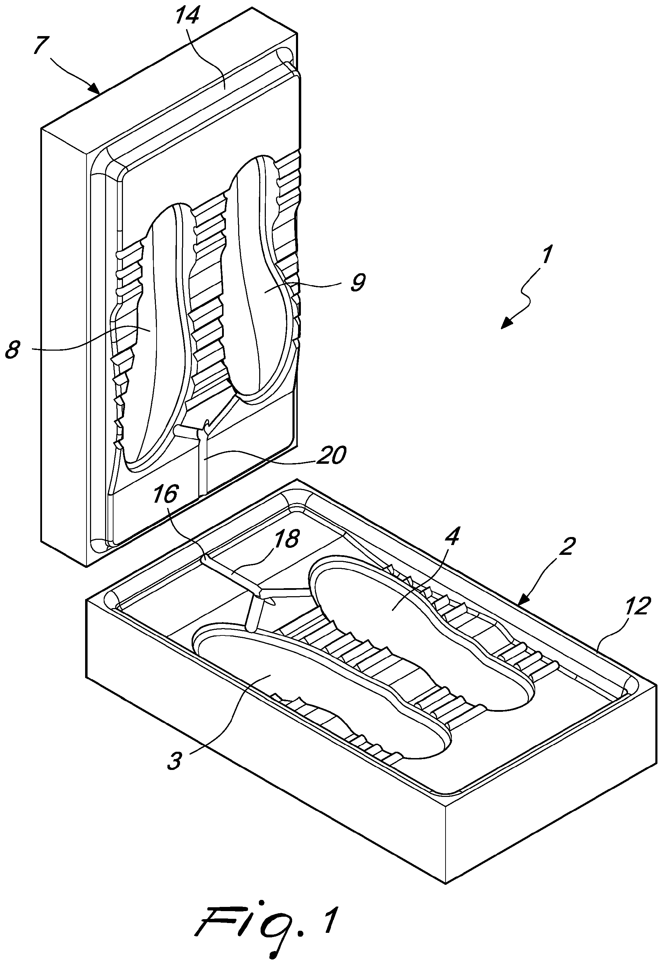

Figure 1 is a schematic perspective view of a possible embodiment of a kit for molding polymeric manufactured articles according to the invention;

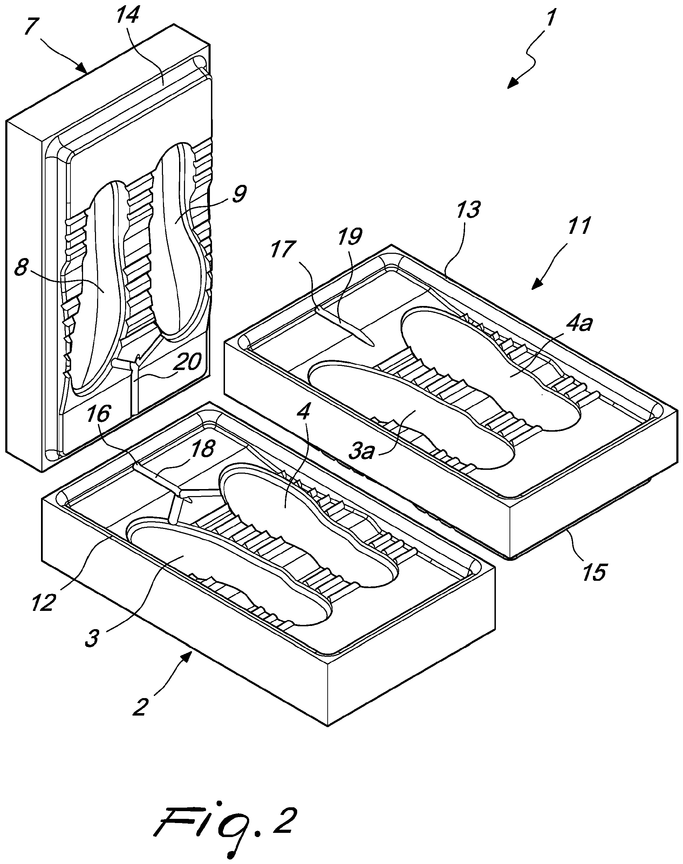

Figure 2 is a schematic perspective view of a possible embodiment of a kit for molding layered polymeric manufactured articles according to the invention;

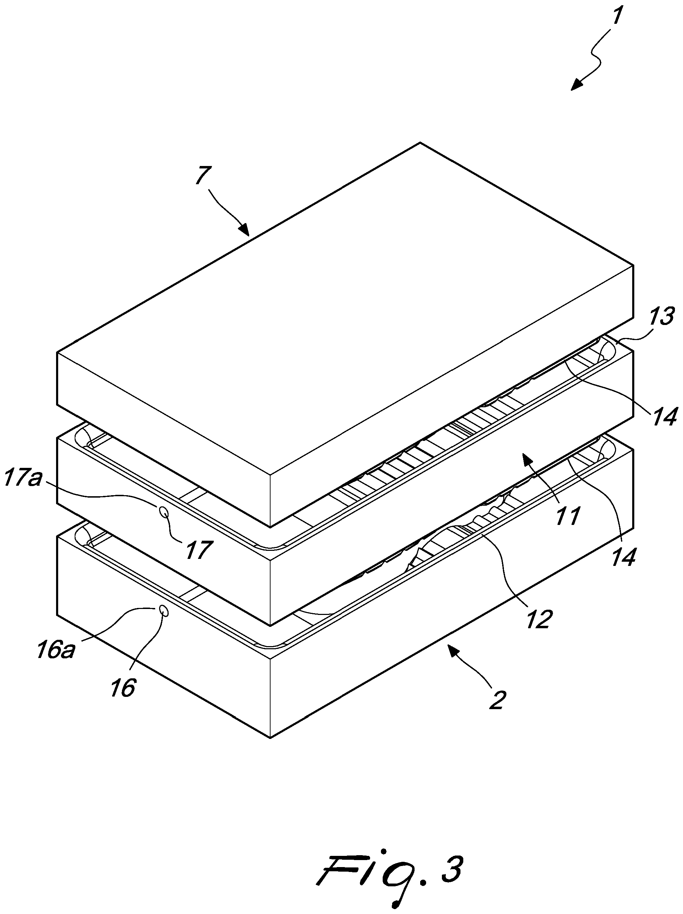

Figure 3 is a schematic perspective view of the kit of Figure 2 when the components are being closed;

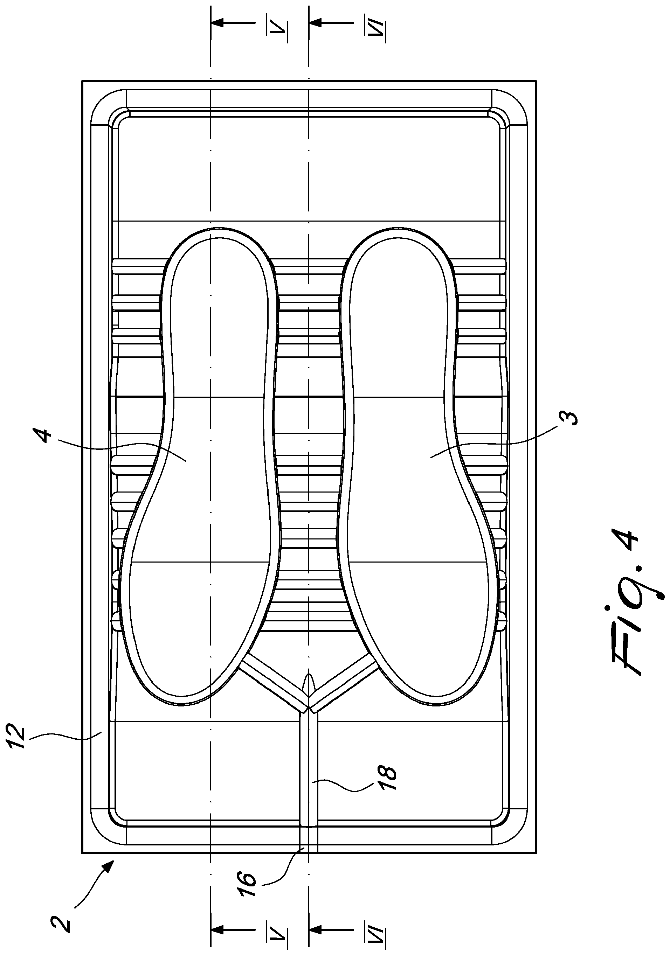

Figure 4 is a schematic view from above of a component of the kit of Figure 1;

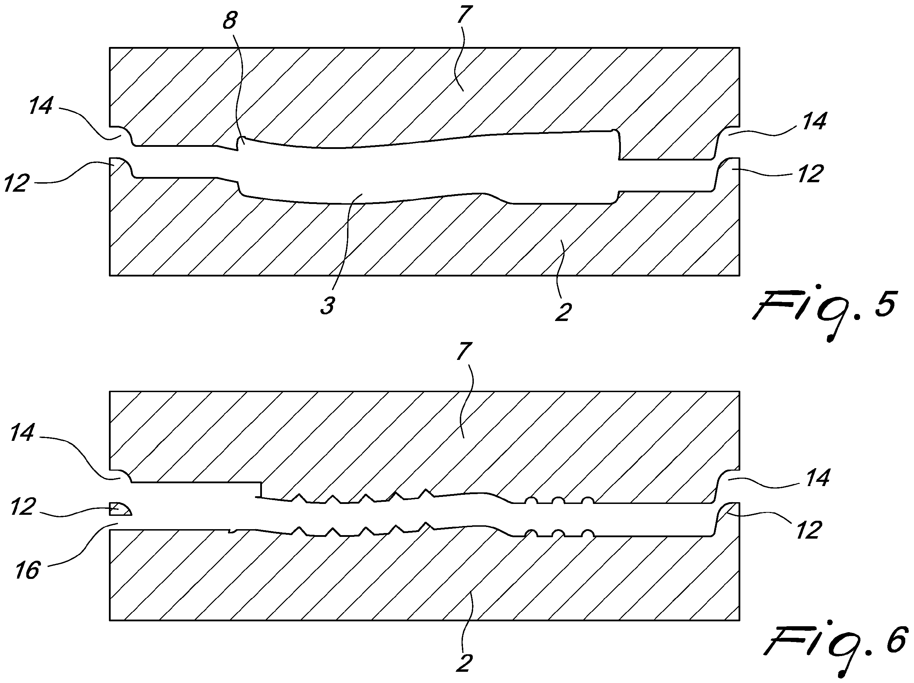

Figure 5 is a cross-sectional view taken along the line V-V in Figure 4 of the corresponding component;
Figure 6 is a cross-sectional view taken along the line VI-VI in Figure 4 of the corresponding component;

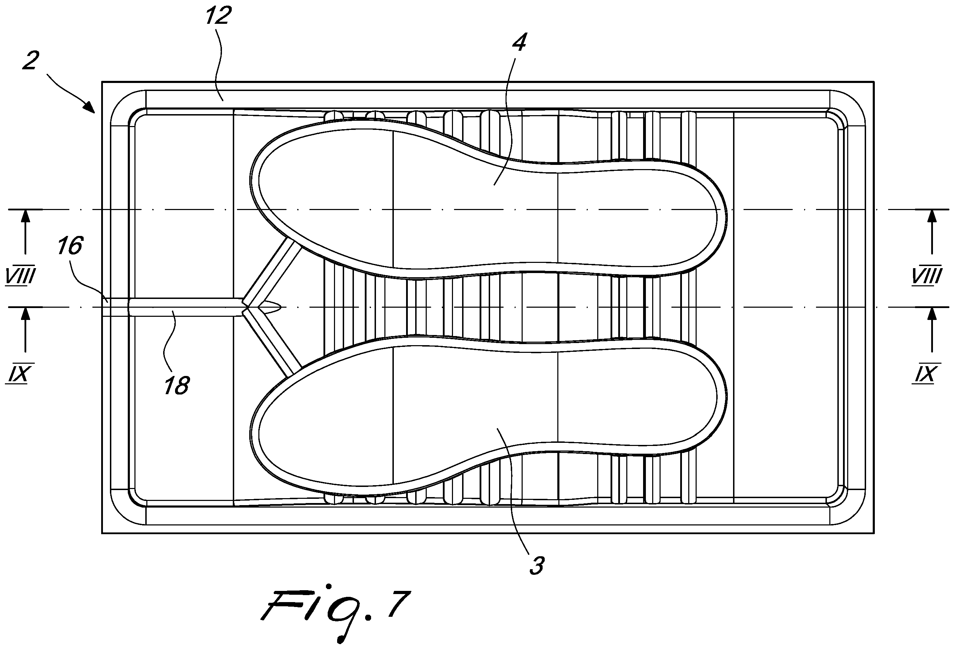

Figure 7 is a schematic view from above of a component of the kit of Figure 2;

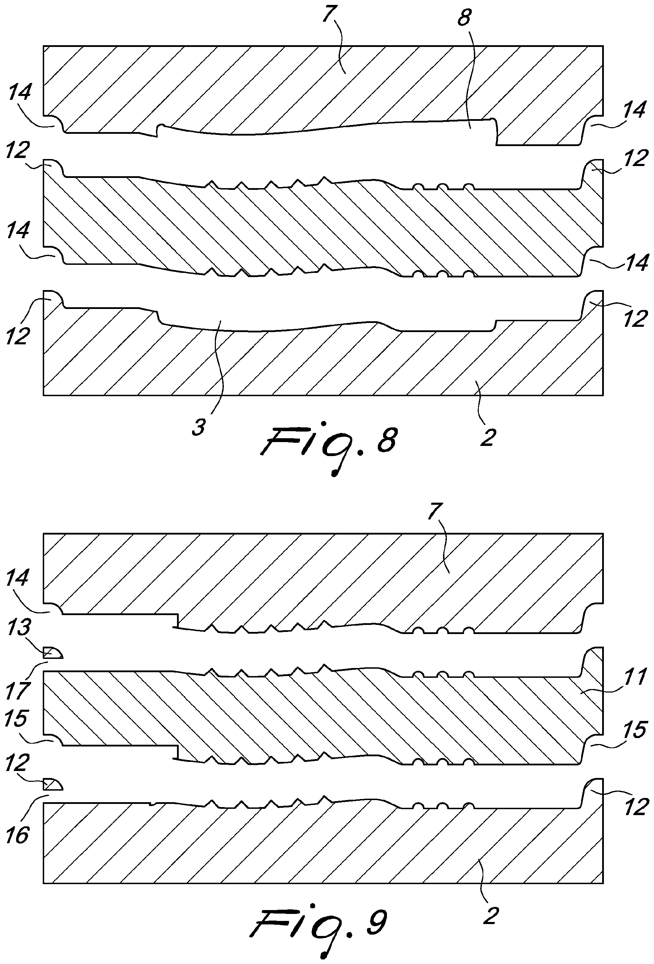

Figure 8 is a cross-sectional view taken along the line VIII-VIII in Figure 7 of the corresponding component;
Figure 9 is a cross-sectional view taken along the line IX-IX in Figure 8 of the corresponding component;

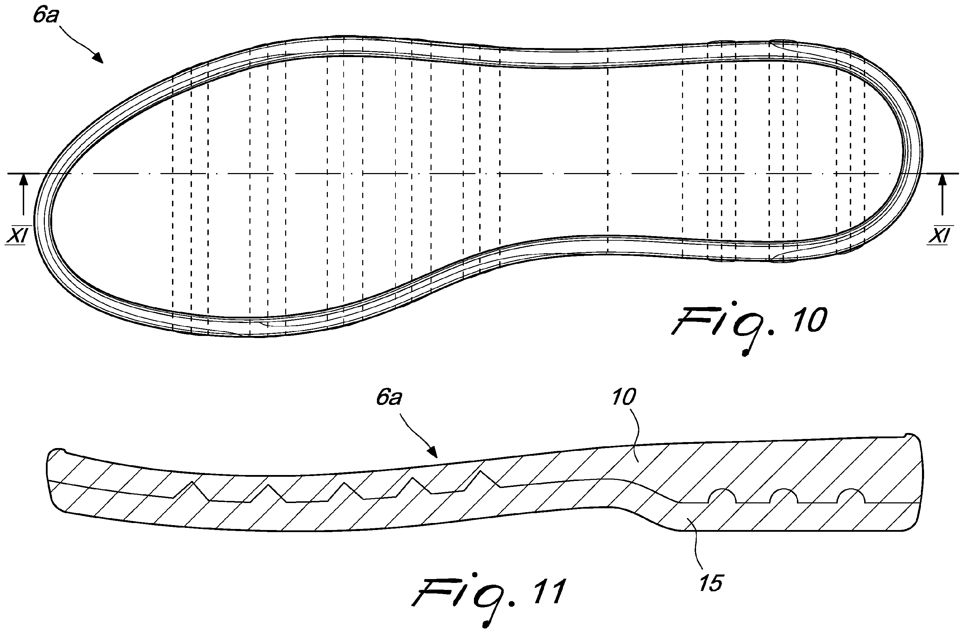

Figure 10 is a schematic view from above of a manufactured article produced with the kit of Figure 1;
Figure 11 is a cross-sectional view taken along the line XI-XI in Figure 10 of the corresponding manufactured article;

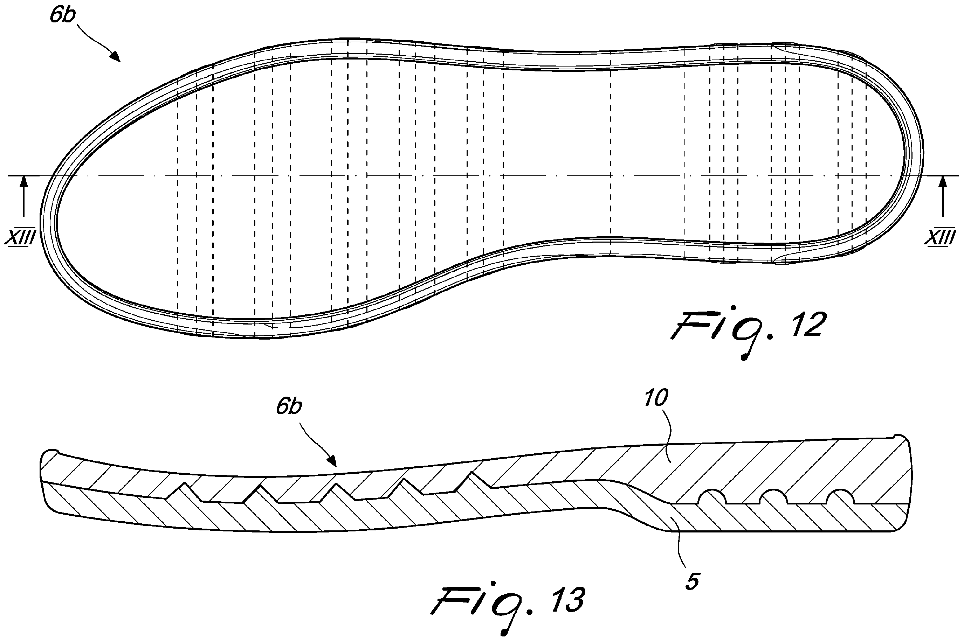

Figure 12 is a schematic view from above of a manufactured article produced with the kit of Figure 2;
Figure 13 is a cross-sectional view taken along the line XIII-XIII in Figure 10 of the corresponding manufactured article.

With reference to the figures, the reference numeral 1 generally designates a kit for molding polymeric manufactured articles.

The kit 1 according to the invention comprises a male mold part 2, provided with at least one first seat 3, 4 that corresponds to at least one first portion 5 of the at least one manufactured article 6a, 6b to be provided, and a female mold part 7, provided with at least one second seat 8, 9 that corresponds to at least one second portion 10, which is complementary to the at least one first portion 5 of the at least one manufactured article 6a, 6b to be provided.

In the kit 1 according to the invention, at least one component chosen from the male mold part 2, the female mold part 7, and at least one accessory plate 11 advantageously comprises a protruding perimetric border 12, 13 which is delimited by substantially flat and regular surfaces.

It should be noted that at least one additional component chosen from the female mold part 7, the male mold part 2 and the at least one accessory plate 11 usefully comprises a recessed perimetric indent 14, 15, which is delimited by substantially flat and regular surfaces.

The perimetric indent 14, 15 will conveniently have a shape and dimensions complementary to those of the border 12, 13 for a respective hermetic coupling when the male mold part and the female mold part 7 are mutually coupled so as to define the cavity (constituted by the union of the first seats 3, 4 with the respective second seats 8, 9) that corresponds to the manufactured article 6a, 6b to be provided.

With particular reference to an embodiment of undoubted practical and applicative interest, it should be noted that the perimetric border 12, 13 can advantageously comprise a through hole 16, 17 that leads to a groove 18, 19 on the inner face of the respective component. The groove 18, 19 will positively connect the through hole 16, 17 to the respective seat (first seats 3, 4, second seats 8, 9, and seats 3a and 4a of the intermediate plate 11 if present) of the component.

Still with reference to the embodiment just illustrated, it should furthermore be noted that the at least one additional component will profitably comprise a complementary groove 20 with shape and dimensions complementary to those of the corresponding groove 18, 19.

When the male mold part 2 and the female mold part 7 are mutually coupled so as to define the cavity that corresponds to the manufactured article 6a to be provided, the hole 16, the groove 18 and the complementary groove 20 will define the channel for the injection of the polymer into that cavity.

The molding technique will entail mating the two components, injecting the polymer through the hole 16 and waiting for a predefined time interval (during which the polymer will cross-link).

At the end of the predefined time interval the manufactured article 6a will be extracted and will undergo an expansion (since the gases released by the blowing agents, at the temperature of the male mold part 2 and the female mold part 7, will tend to occupy the maximum possible volume).

During the subsequent cooling the manufactured article 6a will undergo a contraction which will result in its assuming the desired dimensions (generally larger than the dimensions of the cavity delimited between the male mold part 2 and the female mold part 7).

In order to provide layered manufactured articles 6b (i.e. articles in which a continuous superimposition of layers can be identified which have different characteristics, for example different colors) the molding technique will need to adopt at least one intermediate accessory plate 11, which will comprise, on a first face thereof, a protruding perimetric band (i.e. the perimetric border 13) with shape and dimensions complementary to those of the indent 14 of the female mold part 7 for a respective hermetic coupling in the configuration of mutual juxtaposition, and, on a second face, a recessed perimetric hollow (i.e. the indent 15) with shape and dimensions complementary to those of the border 12 of the male mold part 2 for a respective hermetic coupling, when the male mold part 2, the intermediate accessory plate 11 and the female mold part 7 are in the configuration of mutual juxtaposition.

In this case the molding technique will entail mating the 3 components, injecting the polymer through the holes 16 and 17 and waiting for a first predefined time interval (during which the polymer will begin to cross-link).

The intermediate plate 11 will then be removed and the male mold part 2 and the female mold part 7 will be mated together, keeping them clamped together for a second predefined time (so that the two distinct portions 5, 10 of the manufactured article 6b become stably joined).

When extracted, the manufactured article 6b will undergo an expansion (since the gases released by the blowing agents, at the temperature of the male mold part 2 and the female mold part 7, will tend to occupy the maximum possible volume).

During the subsequent cooling the manufactured article 6b will undergo a contraction which will result in its assuming the desired dimensions (generally larger than the dimensions of the cavity delimited between the male mold part 2 and the female mold part 7).

With regard to what is specified above, it should be noted that positively the components (i.e. the first mold part 2, the female mold part 7 and the accessory plate 11), during the molding operations, will advantageously be kept at a temperature comprised between 100° C and 250° C.

The temperature will be chosen so that it is higher than (at most equal to) the cross-linking temperature of the polymer that will be injected.

Such temperature will furthermore also be higher than the temperature that triggers the blowing agents that will cause chemical reactions that release gases (which induce the expansion and which, in the finished manufactured article 6a, 6b, will remain contained inside closed cells of the polymer, thus giving it the necessary softness and elasticity).

In order to clarify how the polymer is injected, it should be noted that a region 16a, 17a of the outer surface of the perimetric border 12, 13 which comprises the through hole 16, 17 that leads to the groove 18, 19 of the inner face of the corresponding component will conveniently have a shape substantially complementary to that of a nozzle for the injection of a heated polymer.

The nozzle can thus be juxtaposed against such region 16a, 17a (which constitutes the neighborhood of the hole 16, 17) of the outer surface during the injection of the polymer.

The juxtaposition of the nozzle on such region 16a, 17a will be hermetic, which will be particularly efficient since the region 16a, 17a (the neighborhood of the hole 16, 17) is provided in a single component (in particular at the border 12, 13), other than in traditional molding kits.

It has been seen therefore that the kit 1 according to the invention ensures a perfect seal between its components, following the perfect mating between the border 12, 13 (which has also been defined as the protruding perimetric band) and the indent 14, 15 (which has also been defined as the recessed perimetric hollow).

This particular characteristic makes it possible to best contain the polymer injected (including during the step of expansion thereof) and to maintain the adapted pressure conditions inside the cavity ("the vacuum" is substantially established inside the cavity) before the injection of the polymer.

Furthermore the kit also ensures that no seepage of polymer occurs during injection since the injection nozzle abuts on a region 16a, 17a (around the hole 16, 17) which is shaped complementarily for a perfect mutual hermetic mating.

For example in the embodiment shown in the accompanying figures each region 16a, 17a has a perfectly flat surface, like the front surface of the injection nozzle that will be used.

Advantageously the present invention solves the above mentioned problems, by providing a kit 1 for molding polymeric manufactured articles 6a, 6b that ensures the hermetic seal of its inner cavity.

The hermetic seal, differently from what happens in traditional molding kits in which the seal is ensured by the perfect mating of the surfaces of the components which abut against each other, thus delimiting the cavity into which to inject the polymer, is obtained by the mating of the lateral borders 12, 13 with the indents 14, 15.

This particular shape structure of the components of the kit 1 ensures that, even if there is wear and/or abrasion of the surfaces that abut against each other to delimit the cavity (phenomena that arise after prolonged use of traditional kits owing to the fact that these surfaces have an irregular shape structure), the seal still remains since the borders 12, 13 and the indents 14, 15 are not prone to this problem (except minimally) because their surfaces are flat and free from irregularities.

Conveniently the kit 1 according to the invention therefore ensures that the hermetic seal between its components and therefore of the inner cavity that they delimit cannot be compromised by wear and tear in the course of normal use.

Usefully the kit 1 according to the invention makes it possible to obtain high quality manufactured articles with extremely low percentages of discards: this is by virtue of the fact that it makes it possible to maintain the ideal preventive conditions of vacuum and seal during the expansion/cross-linking of the polymer, and also by virtue of the fact that the injection nozzle interfaces on a region 16a, 17a (around the hole 16, 17) with a uniform surface (in particular with a shape structure that is complementary to that of the nozzle itself).

Advantageously the kit 1 according to the invention does not in fact allow the seepage of polymer during injection, through the respective channel, because the mating between the nozzle and the respective region 16a, 17a (around the hole 16, 17) is securely sealed.

Usefully the kit 1 according to the invention is also suitable for providing complex and layered manufactured articles 6a, 6b.

Once again it is pointed out that by virtue of the kit 1 according to the invention a tight seal is obtained (the border 12, 13 makes a hermetic seal on the corresponding indent 14, 15), along the entire perimeter of the juxtaposed parts of the components of the kit 1. All the irregularities and the anomalous forms owing to the particular shape of the manufactured article 6a, 6b to be provided remain inside the border 12, 13 and the indent 14, 15. Therefore the seal is ensured by the fact that the outer surfaces in mutual contact (the surfaces of the border 12, 13 and of the indent 14, 15) are completely flat. Imperfections in the jagged areas that are located around the first seat 3, 4 and the second seat 8, 9 (as well as along their edges) owing to unusual or particular forms of the manufactured article 6a, 6b that one intends to produce do not compromise productivity, which remains certain and constant.

Furthermore, by virtue of the kit 1 according to the invention an extraordinary efficiency of the fit around the first seat 3, 4 and the second seat 8, 9 is achieved.

The particular shape structure of the kit 1 according to the invention optimizes the establishment and maintenance of the vacuum inside the cavity (or cavities) defined internally when the components are mutually juxtaposed in the closed configuration: since the juxtaposed parts of the various components of the kit 1 have a flat perimeter, they clamp to each other cleanly and precisely, in so doing permitting no air to filter through, and ideally isolating the cavity (or cavities), which achieves and maintains the vacuum with respect to the outside in a certain and continuous manner.

The kit 1 according to the invention further makes it possible to prevent irregular surfaces from getting jammed in each other: this condition (typical of conventional kits) results in more delicate fits that are more prone to damage with use, as well as being difficult to maintain and having high repair costs, in the event of the infiltration of air which, by causing the loss of vacuum, would also result in production discards.

The kit 1 according to the invention makes it possible to prevent the negative effects owing to any imperfections that may form during the melting of metallic alloys and/or machining operations during the creation of the components of the kit 1 itself: in fact the extent and the uniformity of the surface of the borders 12, 13 and of the indents 14, 15 minimize any consequences owing to a localized imperfection.

The kit 1 according to the invention further makes it possible to eliminate the problems of infiltration of air owing to possible juxtapositions of corresponding components that are mutually coupled even though, for any reason, they have different temperatures (therefore with the metallic alloys that constitute them dilated differently as a result of the respective temperature). Such differences in shape and/or dimensions of the surfaces that comprise the seats 3, 4, 3a, 4a, 8, 9 of the various components would taint the relative castings of the manufactured article, but not the perimetric parts (in particular the borders 12, 13 and the indents 14, 15) which, being flat, maintain corresponding and complementary geometric characteristics, thus ensuring the seal.

The kit 1 makes it possible to decisively reduce the wear of the components during production (repeated molding operations), thus considerably prolonging the usage time before needing to resort to operational stoppages for maintenance.

The kit 1 according to the invention further makes it possible to facilitate cleaning operations between one production cycle and the next, by decreasing the times for such operation, since cleaning the residues and any inert materials (constituted by a buildup of release agents) on a smooth and flat surface is extremely easy and quick, other than in kits of the conventional type in which such operations need to be carried out on a jagged surface, provided with receptacles that tend to retain the dirt.

The kit 1 according to the invention further facilitates the design of surfaces with very complex and irregular structures (i.e. if the first seats 3, 4, the second seats 8, 9 and the areas adjacent to them are variously contoured); in fact the seal will be ensured by the mating of the border 12, 13 with the respective indent 14, 15, the surface and s shape of which are uniform: this makes it possible to considerably improve the creation and fine-tuning of the corresponding components of the kit 1.

The kit 1 according to the invention, as a result of how it was conceived, can easily interface with the injector nozzle, which will abut against a region 16a, 17a located around a hole 16, 17 belonging to a single component and therefore with a surface that is uniform, continuous and free from unevenness, projections, recesses and the like. Furthermore, since the injector nozzle will abut against a region 16a, 17a of a single component, it will also avoid problems deriving from possible different temperatures of the separate components that define the injection channel in kits of the conventional type (two components of a traditional kit that are at different temperatures will be subject to different thermal dilations and therefore the inlet of the injection channel delimited between them will not have a uniform shape).

The abutment of the nozzle of the injector against the region 16a, 17a around the hole 16, 17 will be perfect because that region 16a, 17a is defined on a single component of the kit 1; therefore, even if the various components of the kit 1 for any reason were at different temperatures, the region 16a, 17a of abutment of the injection nozzle would still be uniformly dilated and therefore perfectly adapted to the sealed abutment of the nozzle of the injector.

The kit 1 according to the invention also makes it possible to mold layered manufactured articles with 2 or more colors (as well as, obviously, manufactured articles constituted by a single layer of expanded polymeric material).

The kit 1 according to the invention ensures a high level of production efficiency by virtue of a lower quantity of manufactured articles 6a, 6b that are defective and will therefore be discarded.

Positively the kit 1 according to the invention is easily and practically implemented and is low-cost: such characteristics make the kit 1 according to the invention an innovation that is safe in use.

The invention, thus conceived, is susceptible of numerous modifications and variations, all of which are within the scope of the appended claims. Moreover, all the details may be substituted by other, technically equivalent elements.

In the embodiments illustrated, individual characteristics shown in relation to specific examples may in reality be interchanged with other, different characteristics, existing in other embodiments.

In practice, the materials employed, as well as the dimensions, may be any according to requirements and to the state of the art.

This application claims priority of Italian Patent Application No. 10 2020 000 021 727.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A kit for molding polymeric manufactured articles, of the type comprising a male mold part (2), provided with at least one first seat (3, 4) that corresponds to at least one first portion (5) of the at least one manufactured article (6a, 6b) to be provided, and a female mold part (7), provided with at least one second seat (8, 9) that corresponds to at least one second portion (10), which is complementary to said at least one first portion (5) of the at least one manufactured article (6a, 6b) to be provided, wherein:
- at least one component chosen from said male mold part (2), said female mold part (7) and at least one intermediate accessory plate (11) comprises a protruding perimetric border (12, 13) which is delimited by substantially flat and regular surfaces, said protruding perimetric border (12, 13) comprising a through hole (16, 17) which leads to a groove (18, 19) of the inner face of said component, said groove (18, 19) connecting said through hole (16, 17) to the respective seat (3, 4, 3a, 4a) of said component; and
- at least one additional component chosen from said female mold part (7), said male mold part (2) and at least one intermediate accessory plate (11) comprises a recessed perimetric indent (14, 15), delimited by substantially flat and regular surfaces, said perimetric indent (14, 15) having a shape and dimensions which are complementary to those of said protruding perimetric border (12, 13) for a respective hermetic coupling when said male mold part (2) and said female mold part (7) are mutually mated so as to define the cavity that corresponds to the manufactured article (6a, 6b) to be provided **characterized in that** said at least one additional component comprises a complementary groove (20) with shape and dimensions complementary to those of said groove (18, 19), when said male mold part (2) and said female mold part (7) are mutually mated so as to define the cavity that corresponds to the manufactured article (6a, 6b) to be provided; said hole (16), said groove (18) and said complementary groove (20) defining the channel for the injection of the polymer into said cavity.

2. The kit according to claim 1, **characterized in that** said at least one intermediate accessory plate (11) comprises, on a first face thereof, a protruding perimetric band, i.e., a border (13), with shape and dimensions complementary to those of said indent (14) for a respective hermetic coupling in the configuration of mutual juxtaposition, and, on a second face, a recessed perimetric hollow, i.e., an indent (15), with shape and dimensions complementary to those of said border (12) for a respective hermetic coupling in the configuration of mutual juxtaposition.

3. The kit according to claim 1, **characterized in that** said components, during the molding operations, are kept at a temperature comprised between 100°C and 250°C.

4. The kit according to claim 1, **characterized in that** a region (16a, 17a) of the outer surface of said protruding perimetric border (12, 13) which comprises said through hole (16, 17) that leads to said groove (18, 19) of the inner face of the corresponding component has a shape substantially complementary to that of a nozzle for the injection of a heated polymer, said nozzle being juxtaposed against said region (16a, 17a) of said outer surface during the injection of said polymer.

## Patentansprüche

1. Ein Bausatz zum Formen von Gegenständen aus Polymer, von der Art, die einen Patrizenteil (2) umfasst, ausgestattet mit mindestens einem ersten Sitz (3, 4), der mindestens einem ersten Abschnitt (5) des mindestens einen herzustellenden Gegenstands (6a, 6b) entspricht, und eine Matrize (7), ausgestattet mit mindestens einem zweiten Sitz (8, 9), der mindestens einem zweiten Abschnitt (10) entspricht, welcher komplementär zu dem mindestens einen ersten Abschnitt (5) des mindestens einen herzustellenden Gegenstands (6a, 6b) ist, wobei
- mindestens eine Komponente, gewählt aus der Patrize (2), der Matrize (7) und mindestens einer intermediären Zubehörplatte (11), einen vorstehenden Umfangsrand (12, 13) umfasst, welcher durch im Wesentlichen flache und regelmäßige Oberflächen begrenzt ist, wobei der vorstehende Umfangsrand (12, 13) ein Durchgangsloch (16, 17) umfasst, das zu einer Nut (18, 19) der Innenseite der Komponente führt, wobei die Nut (18, 19) das Durchgangsloch (16, 17) mit dem jeweiligen Sitz (3, 4, 3a, 4a) der Komponente verbindet; und
- mindestens eine weitere Komponente, gewählt aus der Patrize (2), der Matrize (7) und mindestens einer intermediären Zubehörplatte (11), eine vertiefte Umfangskerbe (14, 15) umfasst, begrenzt durch im Wesentlichen flache und regelmäßige Oberflächen, wobei die Umfangskerbe (14, 15) eine Form und Abmessungen hat, die komplementär zu denjenigen des vorstehenden Umfangsrandes (12, 13) sind, zum Zwecke einer entsprechenden hermetischen Kopplung, wenn die Patrize (2) und die Matrize (7) miteinander verbunden sind, um den Hohlraum zu bestimmen, der dem herzustellenden Gegenstand (6a, 6b) entspricht; **dadurch gekennzeichnet, dass** die mindestens eine zusätzliche Komponente eine komplementäre Nut (20) mit einer Form und Abmessungen umfasst, die komplementär zu denjenigen der Nut (18, 19) sind; wobei das Loch (16), die Nut (18) und die komplementäre Nut (20) den Kanal zum Einspritzen des Polymers in den Hohlraum bestimmen, wenn die Patrize (2) und die Matrize (7) miteinander gekoppelt sind, um den Hohlraum zu bestimmen, der dem herzustellenden Gegenstand (6a, 6b) entspricht.

2. Der Bausatz gemäß Anspruch 1, **dadurch gekennzeichnet, dass** die mindestens eine intermediäre Zubehörplatte (11) auf einer ersten Seite derselben einen vorstehenden Umfangsrand, d. h. eine Begrenzung (13) umfasst, mit einer Form und Abmessungen, die komplementär sind zu denjenigen der Kerbe (14) zum Zwecke einer entsprechenden hermetischen Kopplung in der Anordnung nebeneinander, und auf einer zweiten Seite einen vertieften Umfangshohlraum, d. h. eine Delle (15) mit einer Form und Abmessungen, die komplementär sind zu denjenigen des Randes (12), zum Zwecke einer entsprechenden hermetischen Kopplung in der Anordnung nebeneinander.

3. Der Bausatz gemäß Anspruch 1, **dadurch gekennzeichnet, dass** die Komponenten während der Formarbeiten bei einer Temperatur zwischen 100°C und 250°C gehalten werden.

4. Der Bausatz gemäß Anspruch 1, **dadurch gekennzeichnet, dass** ein Bereich (16a, 17a) der Außenfläche des vorstehenden Umfangsrandes (12, 13), der das Durchgangsloch (16, 17) umfasst, welches zu der Nut (18, 19) der Innenseite der entsprechenden Komponente führt, eine Form hat, die im Wesentlichen komplementär zu derjenigen einer Düse zum Einspritzen eines erhitzten Polymers ist, wobei die Düse während des Einspritzens des Polymers gegen den Bereich (16a, 17a) der Außenfläche aufliegt.

## Revendications

1. Kit de moulage d'articles manufacturés en matière polymère, du type comportant une partie de moule mâle (2), pourvue d'au moins un premier logement (3, 4) qui correspond à au moins une première portion (5) du au moins un article manufacturé (6a, 6b) à fournir, et une partie de moule femelle (7), pourvue d'au moins un second logement (8, 9) qui correspond à au moins une seconde portion (10), qui est complémentaire de ladite au moins une première portion (5) du au moins un article manufacturé (6a, 6b) à fournir, dans lequel :
- au moins un composant choisi parmi ladite partie de moule mâle (2), ladite partie de moule femelle (7) et au moins une plaque accessoire intermédiaire (11) comporte une bordure périmétrique saillante (12, 13) qui est délimitée par des surfaces sensiblement planes et régulières, ladite bordure périmétrique saillante (12, 13) comportant un trou traversant (16, 17) qui mène à une rainure (18, 19) de la face intérieure dudit composant, ladite rainure (18, 19) reliant ledit trou traversant (16, 17) au logement (3, 4, 3a, 4a) respectif dudit composant, et
- au moins un composant supplémentaire choisi parmi ladite partie de moule femelle (7), ladite partie de moule mâle (2) et au moins une plaque accessoire intermédiaire (11) comporte un renfoncement périmétrique évidé (14, 15), délimité par des surfaces sensiblement planes et régulières, ledit renfoncement périmétrique (14, 15) ayant une forme et des dimensions qui sont complémentaires de celles de ladite bordure périmétrique saillante (12, 13) pour un couplage hermétique respectif lorsque ladite partie de moule mâle (2) et ladite partie de moule femelle (7) sont mutuellement appariées de manière à définir la cavité qui correspond à l'article manufacturé (6a, 6b) à fournir, **caractérisé en ce que** ledit au moins un composant supplémentaire comporte une rainure complémentaire (20) de forme et de dimensions complémentaires de celles de ladite rainure (18, 19), lorsque ladite partie de moule mâle (2) et ladite partie de moule femelle (7) sont mutuellement appariées de manière à définir la cavité qui correspond à l'article manufacturé (6a, 6b) à fournir, ledit trou (16), ladite rainure (18) et ladite rainure complémentaire (20) définissant le canal pour l'injection du polymère dans ladite cavité.

2. Kit selon la revendication 1, **caractérisé en ce que** ladite au moins une plaque accessoire intermédiaire (11) comporte, sur une première face de celle-ci, une bande périmétrique saillante, c'est-à-dire une bordure (13), de forme et de dimensions complémentaires de celles dudit renfoncement (14) pour un couplage hermétique respectif dans la configuration de juxtaposition mutuelle, et, sur une seconde face, un creux périmétrique évidé, c'est-à-dire un renfoncement (15), de forme et de dimensions complémentaires de celles de ladite bordure (12) pour un couplage hermétique respectif dans la configuration de juxtaposition mutuelle.

3. Kit selon la revendication 1, **caractérisé en ce que** lesdits composants, pendant les opérations de moulage, sont maintenus à une température comprise entre 100°C et 250°C.

4. Kit selon la revendication 1, **caractérisé en ce qu'**une zone (16a, 17a) de la surface extérieure de ladite bordure périmétrique saillante (12, 13) qui comporte ledit trou traversant (16, 17) qui mène à ladite gorge (18, 19) de la face intérieure du composant correspondant a une forme sensiblement complémentaire de celle d'une buse pour l'injection d'un polymère chauffé, ladite buse étant juxtaposée contre ladite zone (16a, 17a) de ladite surface extérieure pendant l'injection dudit polymère.
